# EUROPEAN PATENT APPLICATION

(11) **EP 4 746 462 A1**
(43) Date of publication of application: **20.05.2026**
(21) Application number: 25216106.2
(22) Date of filing: 16.11.2025
(51) Int. Cl.: H04W 4/80

(54) **METHOD OF COMMUNICATION IN COMMUNICATION SYSTEM FOR REDUCING DATA LOSS**

(30) Priority: 18.11.2024 CN 202411640052; 30.04.2025 CN 202510560674
(71) Applicant: Realtek Semiconductor Corp., HsinChu 30076 (TW)
(72) Inventor: ZHAO, BAOHUI, Suzhou City (CN); LI, YANG, Suzhou City (CN); HE, Dong-Yu, Suzhou City (CN); Li, Hui, Suzhou City (CN)
(74) Representative: Straus, Alexander

(57) **Abstract**

A communication method for a communication system (1) includes a first device (12) sending a device power-on packet (415) to the second device (10), in response to the device power-on packet (415), resetting a second device (10), after the second device (10) is reset, the second device (10) sending a first handshake packet (420) to the first device (12), and in response to the first handshake packet (420), the first device (12) returning a second handshake packet (425) to the second device (10).

## Description

### Field of the Invention

The present invention relates to communication systems, and more specifically to a communication method designed to reduce data loss and communication disruptions, enhance reliability and stability, minimize latency, improve transmission efficiency, and ultimately deliver a better user experience.

### Background of the Invention

Bluetooth technology is a widely adopted short-range wireless communication standard, known for its low power consumption and cost-effectiveness. It has been extensively applied in consumer electronics such as smartphones, wireless headphones, smart home appliances, and health monitoring devices. With the rapid advancement of Internet of Things (IoT) technology, the application scenarios for Bluetooth devices have become increasingly diverse and complex. However, existing Bluetooth communication protocols still face several technical limitations in real-world deployments.

For example, when multiple Bluetooth devices operate within the same environment, wireless signal interference between devices can easily degrade communication quality. Additionally, due to the inherently limited transmission range of Bluetooth technology, communication interruptions or data loss may occur when devices move beyond the effective range. In complex electromagnetic environments, Bluetooth communication is also vulnerable to external interference sources, resulting in increased transmission delays and potential disruptions. These challenges significantly impact user experience and device performance.

In view of the above challenges, there is an urgent need within the industry for an improved Bluetooth communication protocol capable of adapting to complex environments while ensuring data transmission integrity, real-time responsiveness, and continuity. In particular, existing technologies require enhancement in maintaining device communication states and improving the reliability of data transmission.

### Summary of the Invention

The invention is set out in the appended set of claims.

### Brief Description of the Drawings

The invention is illustrated by way of example in the accompanying drawings, in which:
FIG. 1 is an architecture diagram of a Bluetooth system according to an embodiment of the invention;
FIG. 2 shows a format of a Bluetooth packet according to an embodiment of the invention;
FIG. 3 is a flowchart of a communication method for the Bluetooth system in FIG. 1;
FIG. 4 is a message sequence diagram of a handshake mechanism according to an embodiment of the invention;
FIG. 5 is a message sequence diagram of a data retransmission mechanism according to an embodiment of the invention;
FIG. 6 is a message sequence diagram of a data acknowledgment mechanism according to an embodiment of the invention; and
FIG. 7 is a message sequence diagram of a device power-on notification mechanism according to an embodiment of the invention.

### Detailed Description

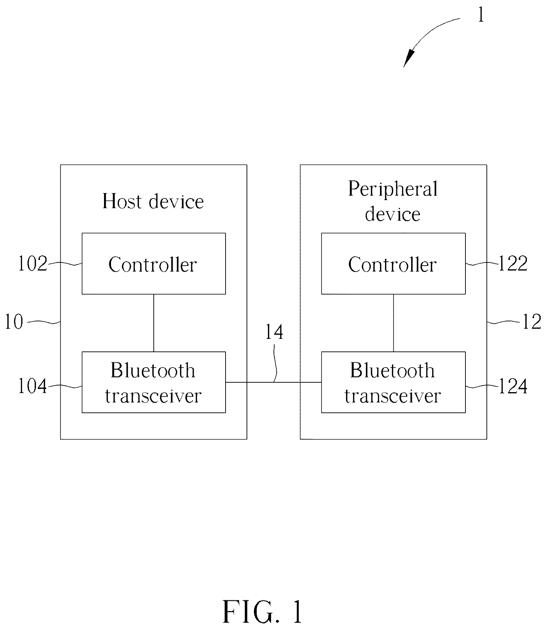

FIG. 1 is an architecture diagram of a Bluetooth system 1 according to an embodiment of the invention. The Bluetooth system 1 may include a host device 10 and a peripheral device 12. The host device 10 may be coupled to the peripheral device 12 via a Bluetooth connection 14. The host device 10 may be a smartphone, tablet computer, or laptop computer, having data processing capabilities and multiple communication interfaces. The peripheral device 12 may be Bluetooth headphones, a smart watch, or a Bluetooth keyboard, having compact size and specialized functions.

The host device 10 may include a controller 102 and a Bluetooth transceiver 104, with the controller 102 coupled to the Bluetooth transceiver 104. The controller 102 may be, but is not limited to, a central processing unit (CPU), and may manage communication processes and data processing. The controller 102 may run an operating system and various applications, processing data from the peripheral device 12. The Bluetooth transceiver 104 may be a Bluetooth module 104 used to receive and transmit Bluetooth signals. The Bluetooth transceiver 104 may support multiple Bluetooth protocols for communicating with the peripheral device 12.

Similarly, the peripheral device 12 may include a controller 122 and a Bluetooth transceiver 124, with the controller 122 coupled to the Bluetooth transceiver 124. The controller 122 may be, but is not limited to, a microcontroller unit (MCU), and may respond to communication requests from the host device 10 and controlling functions of the peripheral device 12, such as volume adjustment and playback control. The Bluetooth transceiver 124 may exchange packets with the Bluetooth transceiver 104 via the Bluetooth connection 14.

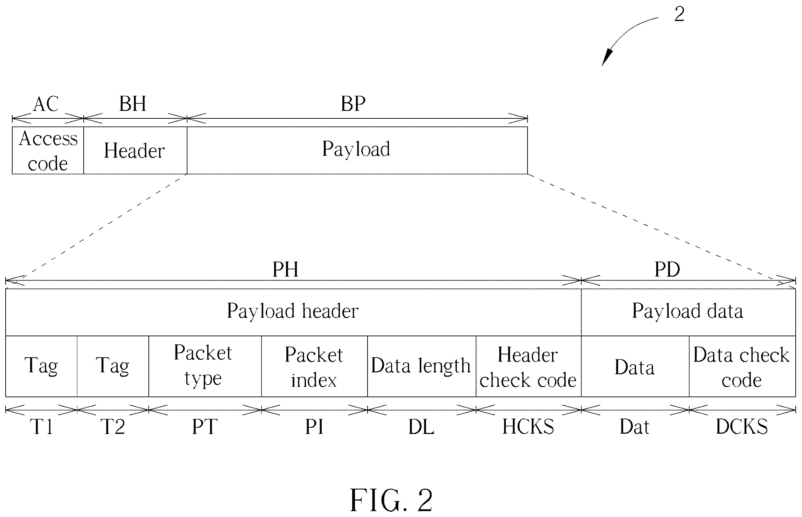

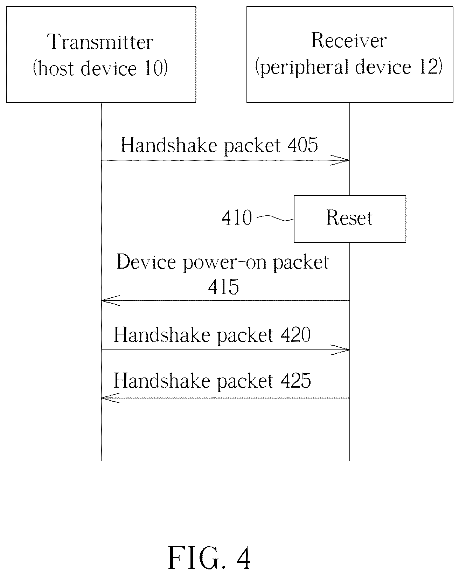

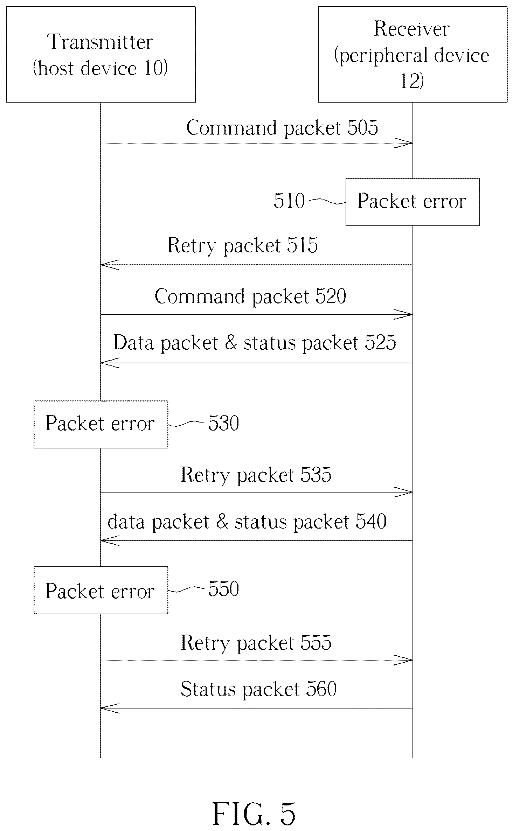

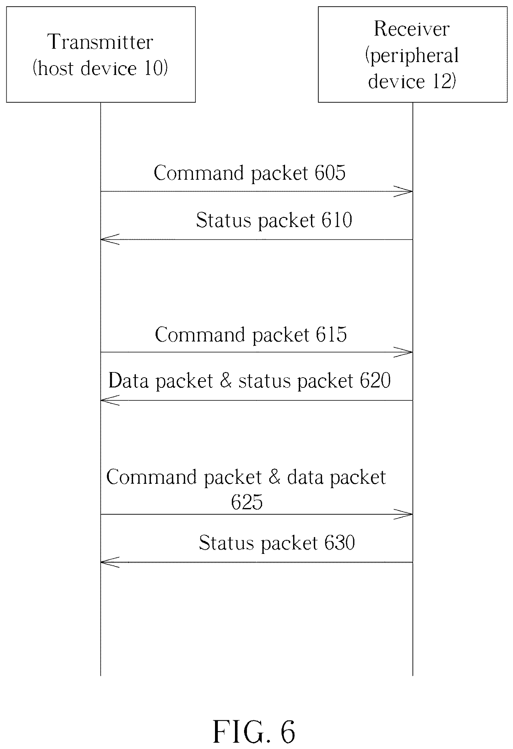

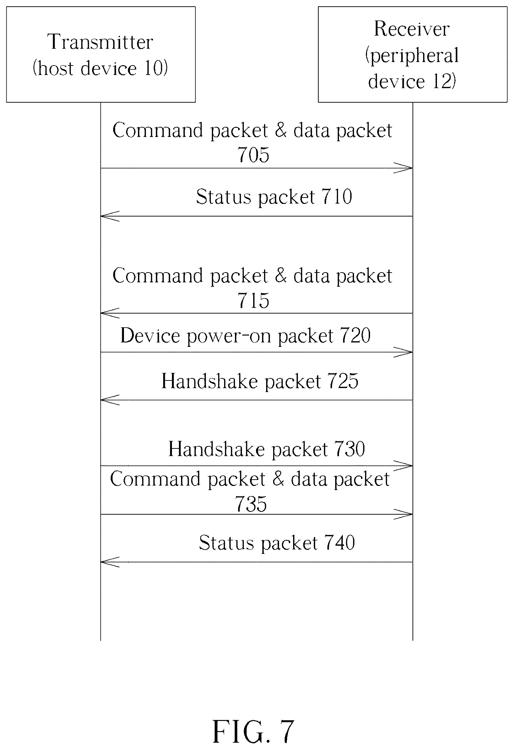

The host device 10 and peripheral device 12 adopt a new Bluetooth communication protocol that is compatible with existing Bluetooth communication protocols, ensuring that the host device 10 and peripheral device 12 can seamlessly collaborate with existing Bluetooth devices. Throughout the entire communication process, the host device 10 and peripheral device 12 can maintain state synchronization between communication devices even when communication abnormalities occur or active power-off happens, thereby enhancing transmission reliability and improving user experience. The new Bluetooth communication protocol defines the format of Bluetooth packets (as shown in FIG. 2) and introduces handshake flows (as shown in FIG. 4), data retransmission flows (as shown in FIG. 5), data acknowledgment flows (as shown in FIG. 6), and device power-on flows (as shown in FIG. 7) to reduce data loss and communication disruptions, thereby improving communication reliability, ensuring communication stability, reducing communication delays, enhancing user experience, and improving transmission efficiency.

FIG. 2 shows the format of a Bluetooth packet 2 adopted by the new Bluetooth communication protocol according to an embodiment of the invention, applicable to the basic rate (BR) mode of Bluetooth communication. The Bluetooth packet format of the invention is not limited to BR-compatible packets; those skilled in the art may also adjust enhanced data rate (EDR) packet formats, Bluetooth low energy (BLE) packet formats, or other suitable communication protocol packet formats based on the principle of the invention and actual requirements.

The Bluetooth packet 2 includes an access code AC, a header BH, and a payload BP to ensure the reliability and integrity of data transmission.

The access code AC is the beginning part of the Bluetooth packet 2, used for packet synchronization, identification, and error detection. Specifically, the access code AC may be used to synchronize the timing of a transmitter and a receiver, ensuring that the transmitter and the receiver communicate on the same timing reference. In addition, the access code AC may be used to identify Bluetooth devices or connections, ensuring that the Bluetooth packet 2 is received by the correct receiver. When performing uplink transmission, the transmitter may be the peripheral device 12, and the receiver may be the host device 10. When performing downlink transmission, the transmitter may be the host device 10, and the receiver may be the peripheral device 12.

The header BH is the middle part of the Bluetooth packet 2, used to define packet types, manage packet sequences, and perform error detection. The header BH may define the type of Bluetooth packet 2, such as data packets or control packets, enabling the receiver to perform corresponding processes according to different packet types. In addition, the header BH may include the sequence number of the Bluetooth packet 2, used to track the order of the Bluetooth packet 2, ensuring that the receiver processes packets in the correct sequence, and preventing packet misordering or packet loss.

The payload BP is the tail part of the Bluetooth packet 2, with variable length, including the actual transmitted data, used for data transmission and error detection. The payload BP stores the actual data content, such as audio, video, or text data. The payload BP may include error detection codes to verify data integrity and enhance the reliability of data transmission.

When receiving the Bluetooth packet 2, the host device 10 or peripheral device 12 will strip off the access code AC and header BH, and only transmit the data content of the payload BP to upper-layer software for processing. Therefore, the upper-layer software cannot use information in the header BH. The upper layer may be any communication layer above the physical layer (such as the application layer). To allow the upper-layer software to detect data loss or communication interruptions and make appropriate decisions for subsequent communication flows, the payload BP may incorporate a payload header PH and payload data PD. This data configuration ensures that upper-layer software has access to essential information during data processing, thus enhancing communication reliability and stability.

The payload header PH may include tags T1 and T2, a packet type PT, a packet index PI, a data length DL, and a header check code HCKS. The payload data PD may immediately follow the payload header PH and may include data Dat and a data check code DCKS.

The tags T1 and T2 may each be 1-byte preset values used to mark the starting position of the payload BP. During Bluetooth transmission, the transmitter may split the data into multiple smaller segments for efficient delivery. When receiving these data segments, since the access code AC and header BH have been removed, the upper-layer software of the receiver can no longer know the starting position of the payload BP. The receiver may quickly identify and parse the packet structure via the tags T1 and T2 to obtain the starting position of the payload BP. When the receiver detects two consecutive preset tag values in the data stream, the receiver may determine that a valid starting position of payload BP has been found. The design of the number of tags is flexible. Although this embodiment employs a dual-tag mechanism, the number of tags can be adjusted based on specific requirements in practical applications. In low-interference environments, a single tag may be sufficient. However, in scenarios requiring high reliability, three or more tags might be necessary, despite the increased header overhead. Therefore, the number of tags may be selected to strike a balance between communication reliability and transmission efficiency.

The packet type PT may finely define the type of Bluetooth packet 2, such as command (CMD) packets, data packets, status packets, retry packets, clear state packets, handshake packets, device power-on packets, or other custom packets. Each packet type may be marked with a preset format, enabling the receiver to perform corresponding processes based on the types of packets, which will be explained in detail in subsequent paragraphs.

The packet index PI may track the transmission sequence of Bluetooth packets, ensuring that the receiver processes the packets in the correct sequence, and preventing packet misordering or packet loss.

The data length DL may represent the length of actual data in the payload data PD, helping the receiver accurately extract data content.

The header check code HCKS is calculated over a range that includes the tag T1, tag T2, packet type PT, packet index PI, data length DL, and other data in the payload header PH. The header check code HCKS is used to verify the integrity and validity of the payload header PH, ensuring that the data within the calculation range has not been corrupted during transmission. The HCKS may be implemented using cyclic redundancy check (CRC), parity bits, checksums, Hamming codes, or other suitable error-detection methods.

The data Dat is the actual data to be transmitted.

The data check code DCKS is calculated over a range that includes all the data Dat. The data check code DCKS is used to verify the integrity and validity of data Dat, ensuring that the data Dat has not been corrupted during transmission. The data check code DCKS may be a cyclic redundancy check, parity bits, checksum, Hamming code, or other suitable check codes.

In this embodiment, the payload BP is divided into two sections: the payload header PH and the payload data PD, with the payload header PH and payload data PD respectively incorporating the header check code HCKS and data check code DCKS, enabling the Bluetooth system 1 to enhance communication efficiency and support resumable transmission. If an error is detected based on the header check code HCKS, the receiver may immediately discard the Bluetooth packet 2 and directly request the transmitter to retransmit without parsing the subsequent data, reducing unnecessary data processing time and enhancing communication efficiency. In addition, if an error is detected based on the data check code DCKS, the receiver may request the transmitter to retransmit starting from the packet where the error occurred, thereby preventing redundant transmission of correctly received data and achieving resumable transmission. The receiver may monitor the transmission sequence via the packet index PI. When the receiver detects an abnormal index PI, the receiver may immediately initiate the transmitter to retransmit, effectively preventing packet loss or misordering and ensuring stable data transmission.

The format design of the Bluetooth packet 2 not only ensures the reliability of data transmission but also significantly improves communication efficiency, making the Bluetooth packet 2 particularly suitable for use in complex wireless communication environments. The embodiment of the invention defines various packet types, including the command packets (CMD packets), data packets, status packets, retry packets, clear state packets, handshake packets, and device power-on packets, based on the format of Bluetooth packet 2. Each packet type is explained in detail below.

The command packet (see Table 1) may be used to transmit command data. The payload BP of the command packet includes the payload header PH and payload data PD. The tag T1 is the preset value "0x55", and the tag T2 is the preset value "0xAA". The packet type PT of the command packet may be set to (but is not limited to) "0x70" to identify the type of command packet. The packet index PI identifies the order of command packets, with a value of i, where i is a non-negative integer. The data length DL represents the length of the data Dat in the payload BP, represented by a positive integer value N, where the unit of N may be bytes. The header check code HCKS is the header check code of the command packet, and is represented by the value HCKS(i). The data Dat contains the actual command content transmitted in the command packet and is represented by the value Dat(i). The data check code DCKS, denoted as DCKS(i), may be used to verify the data Dat in the command packet.

**Table 1**

| Tag T1 | Tag T2 | Packet Type PT | Packet Index PI | Data Length DL | Header Check Code HCKS | Data Dat | Data Check Code DCKS |
|---|---|---|---|---|---|---|---|
| 0x55 | 0xAA | 0x70 | i | N | HCKS(i) | Dat(i) | DCKS(i) |

The data packet (see Table 2) may be used to transmit standard data. The packet type PT of the data packet may be set to (but is not limited to) "0x71" to identify the type of data packet. The explanation of other fields in the data packet may be similar to those in the command packet and will not be repeated here.

**Table 2**

| Tag T1 | Tag T2 | Packet Type PT | Packet Index PI | Data Length DL | Header Check Code HCKS | Data Dat | Data Check Code DCKS |
|---|---|---|---|---|---|---|---|
| 0x55 | 0xAA | 0x71 | i | N | HCKS(i) | Dat(i) | DCKS(i) |

The status packet (see Table 3) is used by the transmitter to confirm whether previously sent commands and/or data have been correctly received. Its packet type PT may be set to '0x72', though other values may also be used. The definitions of the remaining fields are similar to those in the command packet and will not be repeated here.

**Table 3**

| Tag T1 | Tag T2 | Packet Type PT | Packet Index PI | Data Length DL | Header Check Code HCKS | Data Dat | Data Check Code DCKS |
|---|---|---|---|---|---|---|---|
| 0x55 | 0xAA | 0x72 | i | N | HCKS(i) | Dat(i) | DCKS(i) |

The retry packet (see Table 4) may be sent by the receiver to instruct the transmitter to retransmit a specific packet identified by the index thereof, along with subsequent data packet. The payload BP of the retry packet includes the payload header PH but exclude the payload data PD. The packet type PT of the retry packet may be set to "0x73" to identify the type of retry packet, though other values may also be used. The packet index PI which indicates the sequence of the retry packet, is typically set to 0, but may also be assigned other reset values such as 1 in certain embodiments. Since the retry packet does not carry payload data, the value of data length DL is set to 0. The definitions of the remaining fields are similar to those in the command packet and are not repeated here.

**Table 4**

| Tag T1 | Tag T2 | Packet Type PT | Packet Index PI | Data Length DL | Header Check Code HCKS |
|---|---|---|---|---|---|
| 0x55 | 0xAA | 0x73 | i | 0 | HCKS(i) |

The clear state packet (see Table 5) may be sent by the transmitter to notify the receiver to clear the current state and reset the receiver's packet index count to 0 (or other reset values). The packet type PT of the clear state packet may be set to "0x74" to identify the type of clear state packet, though other values may also be used. The definitions of the remaining fields are similar to those in the command packet and are not repeated here.

**Table 5**

| Tag T1 | Tag T2 | Packet Type PT | Packet Index PI | Data Length DL | Header Check Code HCKS |
|---|---|---|---|---|---|
| 0x55 | 0xAA | 0x74 | 0 | 0 | HCKS(0) |

The handshake packet (see Table 6) may be sent by the transmitter or receiver. During a connection flow, the transmitter and receiver perform a handshake to establish communication. Both the transmitter and receiver maintain their respective packet index values. Upon successful completion of the handshake, the current states of both the transmitter and receiver are reset, and their respective packet index values are cleared to 0 or other predefined reset values. The packet type PT of the handshake packet may be set to "0x75" to identify the type of handshake packet, though other values may also be used. The definitions of the remaining fields are similar to those in the command packet and are not repeated here.

**Table 6**

| Tag T1 | Tag T2 | Packet Type PT | Packet Index PI | Data Length DL | Header Check Code HCKS |
|---|---|---|---|---|---|
| 0x55 | 0xAA | 0x76 | 0 | 0 | HCKS(0) |

The device power-on packet (see Table 7) may be sent immediately by the receiver upon powering on, serving to notify the transmitter of its power-on status. The packet type PT of the device power-on packet may be set to "0x77" to identify the type of device power-on packet, though other values may also be used. The packet index PI is set as 0 (or other predefined values). The definitions of the remaining fields are similar to those in the command packet and are not repeated here.

**Table 7**

| Tag T1 | Tag T2 | Packet Type PT | Packet Index PI | Data Length DL | Header Check Code HCKS |
|---|---|---|---|---|---|
| 0x55 | 0xAA | 0x77 | 0 | 0 | HCKS(0) |

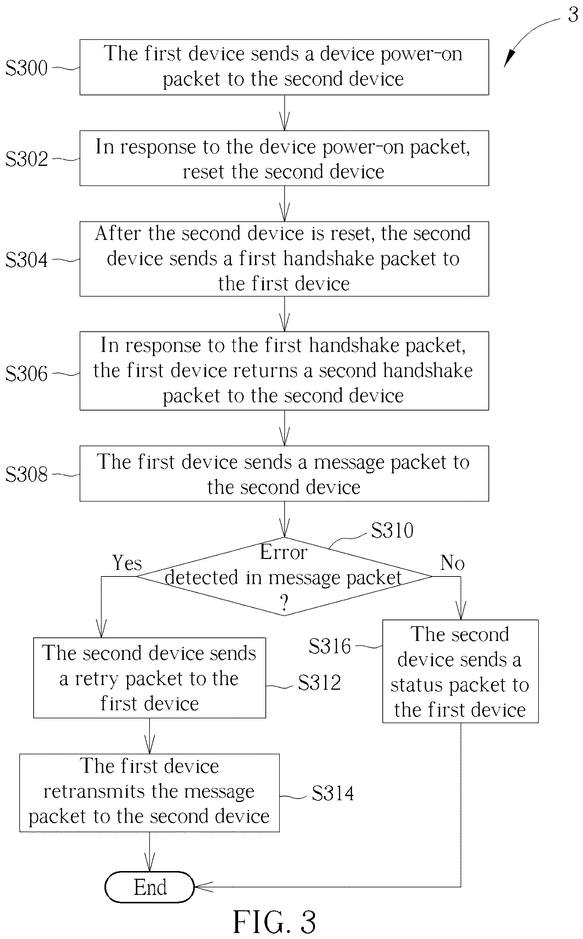

FIG. 3 is a flowchart of communication method 3 for the Bluetooth system 1. The method 3 includes Steps S300 to S316, adopting the format of the Bluetooth packet 2 for communication. Any reasonable technical changes or step adjustments are within the scope disclosed by the invention. The detailed contents of Steps S300 to S316 are explained as follows:

| | |
|---|---|
| Step S300: | The first device sends a device power-on packet to the second device. |
| Step S302: | In response to the device power-on packet, reset the second device. |
| Step S304: | After the second device is reset, the second device sends a first handshake packet to the first device. |
| Step S306: | In response to the first handshake packet, the first device returns a second handshake packet to the second device. |
| Step S308: | The first device sends a message packet to the second device. |
| Step S310: | The second device determines whether an error has been detected in the message packet? If so, continue to Step S312; if not, continue to Step S316. |
| Step S312: | The second device sends a retry packet to the first device. |
| Step S314: | The first device retransmits the message packet to the second device; end the method 3. |
| Step S316: | The second device sends a status packet to the first device; end the method 3. |

In Step S300, the transmission of the device power-on packet may be triggered by a device reset or device restart flow. In addition, the device power-on packet may be initiated by either the first device or the second device. The first device may be one of the host device 10 and peripheral device 12, while the second device may be the other. For illustration purpose, the following embodiment assumes that the first device initiates the device power-on packet. In some embodiments, upon being reset, the first device immediately sends a device power-on packet to the second device. In other embodiments, the packet is sent immediately after the first device restarts.

In Step S302, upon receiving the device power-on packet, the second device resets its internal state and sets its packet index value to a predefined reset value. In Step S304, upon receiving the first handshake packet, the first device similarly resets its internal state and sets its packet index value to the reset value. In Step S306, upon receiving the second handshake packet, the second device confirms that the first device has successfully reset, thereby completing the handshake process. The initiating devices for the first and second handshake packets are not limited to the embodiment described in the method 3. In general, the first handshake packet may be initiated by either the first or second device, while the second handshake packet may be initiated by the other.

In Step S308, the first device sends a message packet to the second device. The message packet may be a command packet, data packet, or status packet, and includes the header check code HCKS and the data check code DCKS. In some embodiments, the message packet may also be a clear state packet, handshake packet, or device power-on packet, and includes the header check code HCKS. Step S308 is not limited to initiation by the first device; in certain embodiments, the second device may also initiate Step S308.

In Step S310, the second device sequentially verifies the header check code HCKS and data check code DCKS (if present) in the message packet. The second device may determine whether an error has occurred in the message packet based on the header check code HCKS and/or data check code DCKS in the message packet. If an error is detected via the data check code HCKS, the second device immediately discards the Bluetooth packet 2 without further checking the data check code DCKS, and initiates retransmission in Step S312. If no error is found in the header check code HCKS, the second device may continue to verify the data check code DCKS. If the data check code DCKS indicates an error, the second device may discard the Bluetooth packet 2 and initiate retransmission in Step S312.

If both the header check code HCKS and data check code DCKS pass verification, the second device may report a status packet to the first device (S316) to confirm successful receipt of the message packet, thereby ending the communication method 3.

In Step S312, the second device sends a retry packet to the first device. After receiving the retry packet, the first device retransmits the message packet to the second device (S314), and the communication method 3 ends.

FIGs. 4-7 are respectively message sequence diagrams of a handshake flow, data retransmission flow, data acknowledgment flow, and device power-on flow according to various embodiments of the invention. The communication method 3 is now explained with reference to FIGs. 4-7, where the transmitter is the host device 10 and the receiver is the peripheral device 12.

The handshake flow establishes a communication connection between two Bluetooth devices, and is used to coordinate parameters such as transmission rates, ensuring correct and efficient data transmission. Referring to the handshake flow in FIG. 4, when the transmitter (host device 10) and receiver (peripheral device 12) communicate for the first time, the transmitter's packet index value is at a reset value. The transmitter initiates the handshake process by sending a handshake packet 405 to the receiver. Upon receiving the handshake packet 405, the receiver performs a reset operation 410, which resets its internal state to an initialization state and clears existing communication settings, including setting the packet index to zero. After completing the reset operation 410 and restarting, the receiver immediately sends a device power-on packet 415 to the transmitter (Step S300) to notify the transmitter of the reset. Upon receiving device power-on packet 415, the transmitter resets its state (Step S302) and sends a handshake packet 420 to the receiver (Step S304), reinitiating the handshake process. In response, the receiver sends a handshake packet 425 back to the transmitter (Step S306), thereby completing the handshake and establishing a communication connection between the transmitter and receiver.

When Bluetooth packets are lost during transmission due to issues such as packet drops, jumps, or corruption (e.g., data packet errors), the data retransmission flow will be activated. In the data retransmission process, the receiver notifies the transmitter to resend the affected packets, ensuring complete and accurate data reception. Referring to the data retransmission flow illustrated in FIG. 5, after the transmitter (host device 10) sends a command packet 505 to the receiver (peripheral device 12), the receiver performs packet verification (Step S310) to assess the integrity and validity of the packet. If an error 510 such as data corruption, data loss, timeout, or packet jumps is detected based on the header check code or data check code, the receiver immediately sends a retry packet 515 to the transmitter (Step S312). The retry packet 515 includes the starting packet index (PI) indicating where retransmission should begin. Upon receiving the retry packet 515, the transmitter resends a specified command packet 520 according to the PI value (Step S314).

After receiving the retransmitted command packet 520, the receiver performs verification (Step S310) to verify the integrity and validity of the command packet 520. Since the verification of the command packet 520 is successful, the receiver returns a data packet and status packet 525 (Step S316). The status packet is used to confirm that the command packet 520 has been correctly received, while data packet includes the data requested by the command packet 520.

The transmitter verifies the received data packet and status packet 525 (Step S310) to ensure the integrity and validity of the data packet and status packet 525. Since the transmitter detects an error 530 in the data packet and status packet 525 based on the header check code or data check code, the transmitter will immediately send a retry packet 535 to the receiver (Step S312). The retry packet 535 contains the starting packet index PI that identifies the point from which retransmission should begin. This packet index PI instructs the receiver to resend a corresponding data packet and status packet 540. Upon receiving the retry packet 535, the receiver retransmits the specified data and status packets according to the packet index PI value in the retry packet 535 (Step S314)

After receiving the retransmitted data packet and status packet 540, the transmitter performs verification (Step S310) to confirm the integrity and validity of the data packet and status packet 540. At this point, since the data packet verification is successful but the status packet verification fails, the transmitter detects a packet error 550 and again sends a retry packet 555 to the receiver (Step S312). The retry packet 555 includes the starting packet index PI that identifies the point from which retransmission should begin. The packet index PI instructs the receiver to retransmit the status packet. After receiving the retry packet 555, the receiver resends a specified status packet 560 according to the packet index PI of the retry packet 555 (Step S314).

After receiving the retransmitted status packet 560 (Step S310), the transmitter performs verification to confirm the integrity and validity of the status packet 560. Following successful verification of the status packet 560, the data transmission is completed. Throughout the entire data transmission process, the data retransmission flow effectively ensures the reliability of transmitted data. Even in cases of a transmission failure, the system resumes from the point of error, preventing permanent data loss. This retransmission mechanism enhances the stability and efficiency of communication between the transmitter and receiver. By leveraging packet index values for precise error localization, the transmitter can selectively retransmit only the affected packets, reducing redundant data transmission and further improving overall system performance.

The data acknowledgment flow ensures that the transmitter (host device 10) and receiver (peripheral device 12) correctly and efficiently receive Bluetooth packets during the transmission process. Referring to the data acknowledgment flow illustrated in FIG. 6, in one example, the transmitter sends a command packet 605 to the receiver. After receiving the command packet 605, the receiver returns a status packet 610 to confirm that the command packet 605 is correctly received.

In another example, the transmitter sends a command packet 615. In response to the command packet 615, the receiver responds with a data packet and status packet 620 to the transmitter. The status packet confirms that the command packet 615 has been correctly received, while data packet contains the data requested by the command packet 615.

In another example, the transmitter sends a command packet and data packet 625. The command packet is used to request the receiver to perform specific functions, while the data packet contains data needed to perform the specific functions. The receiver immediately returns a status packet 630 to confirm the integrity and validity of the command packet and data packet 625.

By promptly returning status packets, the transmitter may verify that the receiver has correctly received data, effectively avoiding redundant retransmissions, thereby reducing network load and improving overall transmission efficiency. In addition, each data transmission is accompanied by a data acknowledgment flow, significantly increasing communication reliability, making the data acknowledgement flow suitable for communication applications requiring high reliability and real-time performance. The data acknowledgment flow may also flexibly adjust the frequency and content of acknowledgment messages based on specific application needs, thereby increasing the adaptability of the Bluetooth system 1.

The device power-on flow initiates the corresponding Bluetooth device to reset and reestablish a connection between the transmitter (host device 10) and receiver (peripheral device 12) upon power restoration of either the transmitter or the receiver. In FIG. 7, the transmitter first sends a command packet and data packet 705 to the receiver. After receiving the command packet and data packet 705, the receiver promptly returns a status packet 710 to confirm successful reception.

Next, after the receiver sends a command packet and data packet 715 to the transmitter, the transmitter is restarted, triggering the transmitter to send a device power-on packet 720 to the receiver, thereby notifying the receiver that the transmitter has restarted. The transmitter and receiver subsequently exchange handshake packets 725, 730 to reestablish the connection.

After completing the handshake, the transmitter sends a command packet and data packet 735 to the receiver via the connection, and the receiver returns a status packet 740, resuming normal communication.

By immediately notifying the transmitter using the device power-on packet, the transmitter may promptly detect the receiver's power-on status, preventing communication issues caused by state desynchronization. Upon receiving the power-on notification, the transmitter resets its internal state and packet index to zero, ensuring accurate communication moving forward. Both the transmitter and receiver then engage in a bidirectional handshake to reestablish the connection, effectively avoiding protocol mismatches and enhancing overall system stability.

The handshake flow, data retransmission flow, data acknowledgment flow, and power-on notification flow described in the embodiments of the invention can be extended to multi-device Bluetooth systems. For instance, when a specific receiver powers on, the transmitter not only resets its own state information but also broadcasts a device power-on packet to notify other devices in the system. This coordinated notification prompts those devices to temporarily pause related communications until the newly powered-on device completes initialization and resynchronizes with the network. This mechanism is particularly useful for multi-device collaborative systems that demand high levels of synchronization and communication integrity.

The invention is not limited to application in Bluetooth systems; those skilled in the art may adjust packet formats and processes of other suitable communication protocols according to the principle of the invention and actual requirements to ensure the integrity, real-time performance, and continuity of data transmission.

The embodiments of the invention introduce Bluetooth packet formats and corresponding communication protocols to support handshake flows, data retransmission flows, data acknowledgment flows, and device restart flows. These mechanisms collectively reduce data loss and communication interruptions, enhance reliability and stability, minimize latency, improve transmission efficiency, and ultimately deliver an enhanced user experience.

## Claims

1. A communication method for a communication system (1), **characterized by** the communication system (1) comprising a first device (12) and a second device (10), the method comprising:
the first device (12) sending a device power-on packet (415) to the second device (10);
in response to the device power-on packet (415), resetting the second device (10);
after the second device (10) is reset, the second device (10) sending a first handshake packet (420) to the first device (12); and
in response to the first handshake packet (420), the first device (12) returning a second handshake packet (425) to the second device (10).

2. The method of claim 1, **characterized in that** the device power-on packet (415) includes a packet index value, and the packet index value is a reset value.

3. The method of claim 1, **characterized in that** the first device (12) sending the device power-on packet (415) to the second device (10) comprises:
upon the first device (12) being reset, the first device (12) sending the device power-on packet (415) to the second device (10).

4. The method of claim 1, **characterized in that** the first device (12) sending the device power-on packet (415) to the second device (10) comprises:
upon restart of the first device (12) restart, the first device (12) sending the device power-on packet (415) to the second device (10).

5. The method of claim 1, **characterized in that** in response to the device power-on packet (415), resetting the second device (10) comprises:
setting a packet index value of the second device (10) to a reset value.

6. The method of claim 1, **characterized in that** the method further comprises:
the first device (12) sending a message packet (520, 525) to the second device (10);
the second device (10) determining whether an error has occurred in the message packet (520, 525); and
the second device (10) sending a response packet (525, 535) to the first device (12) based on an error detection result of the message packet (520, 525).

7. The method of claim 6, **characterized in that:**
the message packet (520, 525) includes a header (BH), the header (BH) includes a header check code; and
the second device (10) determining whether the error has occurred in the message packet (520, 525) comprises:
the second device (10) determining whether an error has occurred in the message packet (520, 525) based on the header check code in the message packet (520, 525).

8. The method of claim 6, **characterized in that:**
the message packet (520, 525) includes a payload (BP), the payload (BP) includes a data check code; and
the second device (10) determining whether the error has occurred in the message packet (520, 525) comprises:
the second device (10) determining whether an error has occurred in the message packet (520, 525) based on the data check code in the message packet (520, 525).

9. The method of claim 6, **characterized in that** the second device (10) sending the response packet (525, 535) to the first device (12) based on the error detection result of the message packet (520, 525) comprises:
if an error (530) is detected in the message packet (525), the response packet is a retry packet (535).

10. The method of claim 6, **characterized in that** the second device (10) sending the response packet (525, 535) to the first device (12) based on the error detection result of the message packet (520, 525) comprises:
if no error is detected in the message packet (520), the response packet is a status packet (525).
